Europäisches Patentamt

European Patent Office

Office européen des brevets

(19)

(11) Veröffentlichungsnummer: **0 071 852**
**A1**

(12) ## EUROPÄISCHE PATENTANMELDUNG

(21) Anmeldenummer: 82106701.4

(22) Anmeldetag: 24.07.82

(51) Int. Cl.³: **H 02 K 47/18**, H 02 J 9/06

(30) Priorität: 29.07.81 DE 3129928

(43) Veröffentlichungstag der Anmeldung: 16.02.83
Patentblatt 83/7

(84) Benannte Vertragsstaaten: DE FR GB IT NL SE

(71) Anmelder: Anton Piller GmbH & Co. KG, Abgunst 24,
3360 Osterode/Harz (DE)

(72) Erfinder: Sachs, Klaus, Dipl.-Ing., Quellenweg 26,
D-3360 Osterode/Harz (DE)

(74) Vertreter: Gralfs, Harro, Dipl.-Ing., Am Bürgerpark 8,
D-3300 Braunschweig (DE)

(54) **Rotierende Umformermaschine.**

(57) Rotierende Umformermaschine mit einem Ständer (8) mit einer Drehstrom-Primärwicklung (22) und einer Drehstrom-Sekundärwicklung (24) gleicher Polzahl sowie mit einem mit einer Dämpferwicklung (16) versehenen Läufer (10), der in dem Ständer (8) drehbar gelagert ist, wobei die Primärwicklung (22) und die Sekundärwicklung (24) in einem gemeinsamen Ständerpaket (8) jeweils in durchgehenden Nuten über den Umfang des Ständerpaketes (8) gleichmäßig verteilt angeordnet sind, wobei beide Wicklungen (22, 24) sich über die volle Breite des Ständerpaketes (8) erstrecken. Bei dieser Umformermaschine tritt keine Umwandlung der der Primärwicklung (22) zugeführten Leistung in mechanische Energie auf. Es erfolgt vielmehr eine direkte transformatorische Übertragung der elektrischen Energie durch Flußverkettung zwischen den beiden Wicklungen (22, 24).

Anton Piller GmbH & Co. KG
Abgunst 24
3360 Osterode/Harz
Bundesrepublik Deutschland


Rotierende Umformermaschine


Die Erfindung bezieht sich auf eine rotierende Umformermaschine mit einem Ständer mit einer Drehstrom-Primärwicklung und einer Drehstrom-Sekundärwicklung gleicher
Polzahl sowie mit einem, mit einer Dämpferwicklung
versehenen Läufer, der in dem Ständer drehbar gelagert
ist.

Bekannte rotierende Umformermaschinen sind mit einem Drehstromsynchronmotor und einem Drehstromsynchrongenerator gleicher
Polzahl versehen, die innerhalb eines gemeinsamen Gehäuses
angeordnet sind. Im Ständer sind dabei zwei gesonderte
Ständerpakete für die Statorwicklungen des Motors und des
Generators axial im Abstand angeordnet. Die Läufer für den
Motor und den Generator sind in entsprechendem axialen Abstand
auf einer gemeinsamen Welle angeordnet. Bei derartigen Umformermaschinen handelt es sich um zwei mechanisch über die gemeinsame
Welle gekuppelte Maschinen. Eine solche Umformermaschine
entspricht damit im Prinzip bekannten Anordnungen, bei denen
Motor und Generator in gesonderten Gehäusen angeordnet und miteinander über Kupplungselemente verbunden sind.

Bei allen derartigen Umformermaschinen dieser Art wird die in den Motor eingespeiste elektrische Leistung zunächst in mechanische Wellenleistung umgewandelt, über die dann der Generator angetrieben wird.

Bekannt sind weiter Generatoren mit Mehrfachwicklungen.

Aufgabe der Erfindung ist es, eine Umformermaschine zu schaffen, bei der bei gegenüber den bekannten Umformermaschinen wesentlich verringertem Leistungsgewicht eine wesentliche Verbesserung des Wirkungsgrades sowie eine Erhöhung des Stoßkurzschlußstroms erreicht wird.

Diese Aufgabe wird gemäß der Erfindung dadurch gelöst, daß die Primärwicklung und die Sekundärwicklung in einem gemeinsamen Ständerpaket jeweils in durchgehenden Nuten über den Umfang des Ständerpaketes gleichmäßig verteilt angeordnet sind, wobei beide Wicklungen sich über die volle Breite des Ständerpaketes erstrecken.

Zweckmäßige Ausgestaltungen der Umformermaschine gemäß der Erfindung sind Gegenstand der Ansprüche 2 bis 6.

Zweckmäßige Umformersysteme mit Umformermaschinen gemäß der Erfindung sind Gegenstand der Ansprüche 7 bis 12.

Eine besonders zweckmäßige Ausgestaltung eines Umformersystems als Notstromaggregat ist Gegenstand des Anspruches 13.

Die Erfindung ist in der Zeichnung beispielsweise veranschaulicht und im nachstehenden im einzelnen anhand der Zeichnung beschrieben.

Fig. 1   zeigt schematisch einen Längsschnitt durch eine Umformermaschine gemäß der Erfindung.

Fig. 2   zeigt einen Schnitt längs der Linie II in Fig. 1 mit schematisch herausgezeichneten Wicklungen.

Fig. 3 bis 6 zeigen verschiedene Umformersysteme mit Umformermaschinen gemäß der Erfindung.

Fig. 7   zeigt ein Umformersystem mit einer Wärmekraftmaschine als Notstromantrieb.

Fig. 8   zeigt ein Wickelschema einer ausgeführten Umformermaschine gemäß der Erfindung.

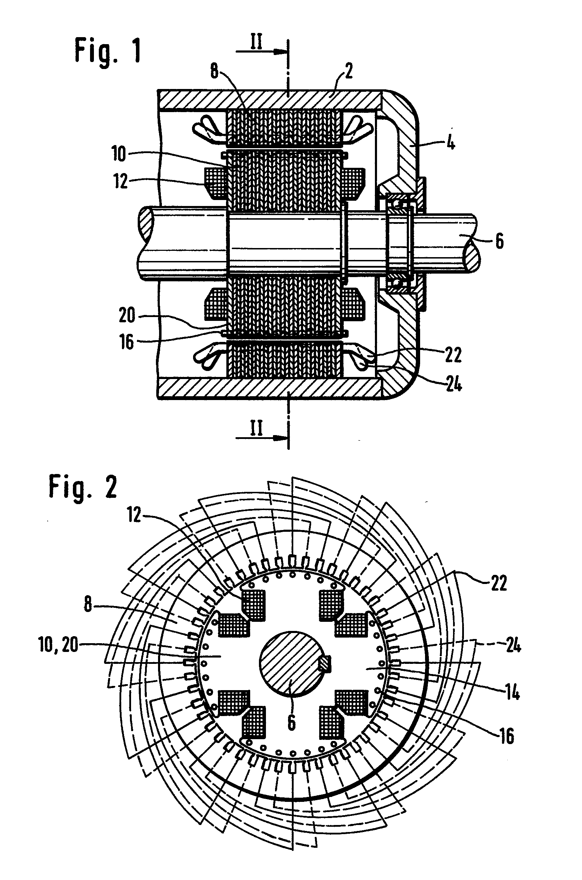

Die Umformermaschine, die in Fig. 1 im Schnitt dargestellt ist, weist ein Gehäuse 2 mit Lagerschilden 4 auf, von denen in der Anlage nur eines dargestellt ist und in denen eine Welle 6 drehbar gelagert ist. Innerhalb des Gehäuses 2 ist ein Ständerpaket 8 angeordnet, das als gemeinsames Ständerpaket für eine Primärwicklung 22 und eine Sekundärwicklung 24 ausgebildet ist, die vorzugsweise identisch ausgebildet sind. Primär- und Sekundärwicklung liegen jeweils um eine Nutteilung versetzt.

Auf der Welle 6 ist ein Läufer 10 angeordnet, der hier als Schenkelpolläufer mit vier Polen ausgebildet ist, aber auch als Trommelläufer ausgebildet sein kann. Der Läufer 10 ist gemeinsam beiden Ständerwicklungen zugeordnet. Der Läufer 10 ist mit einer Dämpfungswicklung versehen. In den Polschuhen 14 sind Dämpferstäbe 16 angeordnet, die an ihren stirnseitigen Enden kurzgeschlossen sind. Dieser Kurzschluß erfolgt vorzugsweise über Kupferbleche 20, die jeweils stirnseitig das Polradblechpaket abdecken und der Form der Polrad- bleche entsprechen.

- 4 -

Bei dem dargestellten Ausführungsbeispiel ist der Läufer 10 weiter mit Wicklungen 12 versehen, über die er mit Gleichstrom erregt werden kann, wobei die Spannung zu den Gleichstromwicklungen vorzugsweise bürstenlos zugeführt wird.

Die Primärwicklung 22 und die Sekundärwicklung 24 sind in Fig. 1 durch unterschiedliche Kröpfung der Wickelköpfe angedeutet. In Fig. 2 sind die Wicklungsstränge der Primärwicklung 22 in voll ausgezogenen Linien und die Wicklungsstränge der Sekundärwicklung 24 in gestrichelten Linien wiedergegeben. Die Wicklungen 22 und 24 sind in der Zeichnung an einer Maschine in vierpoliger-dreiphasiger Ausführung mit einem verkürzten Wickelschritt von 5/6 Polteilung dargestellt. Es ist lediglich eine Einschichtwicklung schematisch wiedergegeben. In der Praxis wird man die Wicklungen als vollständige Zweischichtwicklungen ausbilden, die nach den bekannten Gesetzen des Elektromaschinenbaus ausgelegt sind. Durch geeignete Sehnung der Wicklungen und Schränkung der Nuten läßt sich eine beliebig gute Annäherung der Spannungskurve an die Sinusform erreichen. Hierzu kann es unter Umständen zweckmäßig sein, jeweils einzelne Wicklungsdrähte eines Wicklungssystems auch in benachbarte Nuten des anderen Wicklungssystems unterzubringen.

Bei der Umformermaschine gemäß der Erfindung tritt keine Umwandlung der der Primärwicklung zugeführten Leistung in mechanische Energie auf. Es erfolgt vielmehr eine direkte transformatorische Übertragung der elektrischen Energie durch Flußverkettung zwischen den beiden Wicklungen 22 und 24.

Der Läufer 1o wird durch das umlaufende magnetische Feld der Primärwicklung 22 mitgenommen. Ist der Läufer als Trommelläufer ausgebildet, erfolgt eine asynchrone Mitnahme. Bei Ausbildung des Läufers als Schenkelpolläufer wird dieser synchron mitgenommen.

Durch die Dämpferwicklung im Läufer werden alle Oberwellen der Primärspannung wirkungsvoll kurzgeschlossen
und damit im Fluß eliminiert. Auf diese Weise wird nur
die Grundfrequenz von der Wicklung 22 auf die Wicklung
24 übertragen.

Durch Steuerung der Gleichstromerregung des Läufers 10
wird die Größe des magnetischen Flusses und damit die
Spannung in der Sekundärwicklung beeinflußt.

Der Start der Umformermaschine erfolgt durch einen Anwurfmotor, der bei derartigen Umformermaschinen üblicherweise
vorzusehen ist, sofern die Maschine nicht für einen
asynchronen Anlauf ausgelegt wird.

Die Auslegung der Umformermaschine erfolgt entsprechend
den addierten Leistungen von Primär- und Sekundärwicklung,
d.h. für die doppelte Leistung, für die bei einer bekannten
Eingehäusemaschine gleicher Leistung jeweils Motor und
Generator auszulegen sind. Dadurch kommt es zu einer
wesentlichen Verringerung des Leistungsgewichtes und
darüber hinaus zu einer Erhöhung des Wirkungsgrades. Es
wird weiter annähernd der doppelte Stoßkurzschlußstrom
erreicht. Zusätzlich kommt hinzu, daß sich die Baulänge
wesentlich verringert bei nur unwesentlich vergrößertem
Durchmesser der Maschine.

Bei Ausbildung mit einem Schenkelpolläufer gibt die Umformermaschine sekundarseitig eine von Lastschwankungen
unabhängige konstante sinusförmige Spannung ab, die unbeeinflußt von allen Vorgängen im Primärnetz bleibt, an das
die Umformermaschine primärseitig angeschlossen ist. Für
die Spannungsregelung ist ein Spannungsregler 29 vorgesehen, der den magnetischen Fluß der Maschine über die Gleichstromerregung des Läufers steuert, vorzugsweise so, daß
die Spannung der Sekundärwicklung im wesentlichen konstant
bleibt. Eine sinusförmige Spannung wird wie erwähnt durch
geeignete Wicklungsauslegung, d.h. durch Sehnung und
gegebenenfalls durch Schränkung der einzelnen Nuten erreicht.
Oberwellen im speisenden Netz rufen Drehfelder höherer
Frequenz hervor, die sich wie erwähnt durch geeignete
Auslegung der Dämpferwicklung wirksam unterbinden lassen.

Bei Ausbildung mit einem Trommelläufer liefert die Umformermaschine sekundarseitig eine sinusförmige Spannung, die
frei ist von Harmonischen, die primärseitig vorliegen können.
Die sekundarseitige Spannung ist bei Verwendung eines
Trommelläufers proportional der primärseitigen Spannung.

Die Oberwellen der 5., 7., 11., 13., 17. und 19. Ordnung
lassen sich beispielsweise in der Dämpferwicklung fast
vollständig kurzschließen, wenn für die Anordnung der
Dämpferstäbe eine Teilung von 10 elektrischen Grad gewählt
wird. Oberwellen dieser Ordnungszahlen treten insbesondere
im Stromrichterbetrieb auf, wie er im nachstehenden noch zu
beschreiben sein wird. Durch eine so bemessene Dämpferwicklung wird ebenfalls eine erhebliche Verringerung der
Spannungsverzerrung bei Belastung der Sekundärwicklung durch
Gleichrichter erreicht. Durch die doppelte Typenleistung
der Umformermaschine beträgt die Spannungsverzerrung nur
etwa die Hälfte wie bei einer nach gleichen Bedingungen
ausgelegten Umformermaschine bekannter Bauart.

Da die elektrische Energie, wie erwähnt, durch Flußverkettung
von der Primärwicklung auf die Sekundärwicklung übertragen wird, braucht auf die Rotorwelle kein Drehmoment übertragen zu werden, ausgenommen der Fall, daß die Umformermaschine in unterbrechungsfreier Stromversorgung mit zusätzlichen Schwungmassen oder einer Kraftmaschine eingesetzt wird, wie weiter unten zu beschreiben ist.

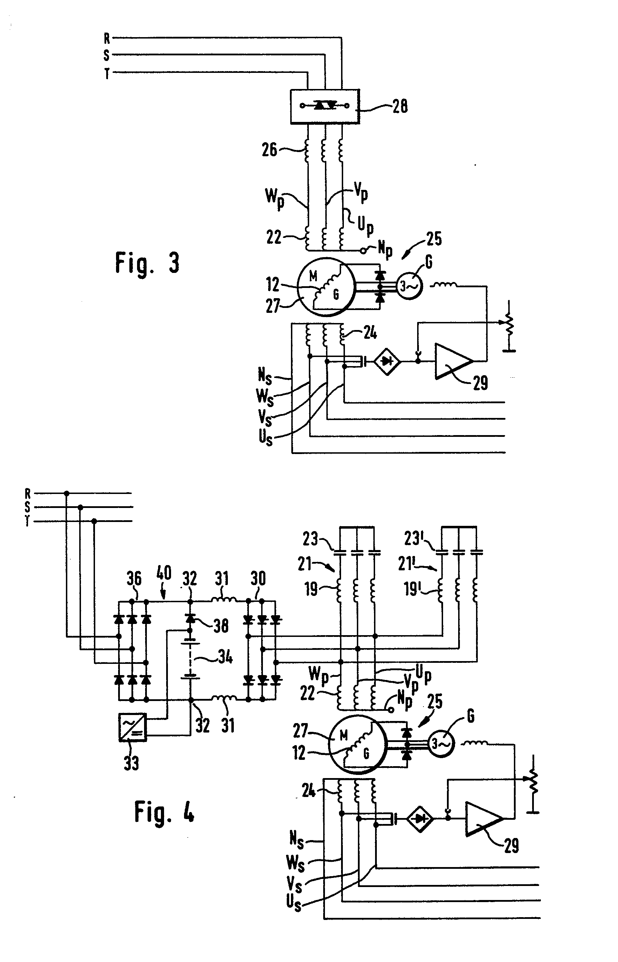

In den Fig. 3 bis 7 ist jeweils der Läufer 27 der Umformermaschine 25 schematisch dargestellt. Die Erregung erfolgt vorzugsweise, wie oben erwähnt, in bekannter Weise bürstenlos. Die Erregung wird gesteuert über einen Spannungsregler 29 in Abhängigkeit von der Spannung der Sekundärwicklung 24.

Fig. 3 zeigt eine Schaltung mit einer Umformermaschine gemäß der Erfindung. Die Primärwicklung 22 der Umformermaschine 25 ist an das Netz RST über in die einzelnen Leiter eingeschaltete Drosseln 26 angeschaltet. Diese Drosseln 26 dienen der Vermeidung von störenden Blindströmen, die besonders bei schwankender Speisespannung bei Spannungsregelung an der Sekundärwicklung 24 auftreten. Durch die Drosseln wird der Blindstrom auf nicht störende Werte begrenzt. Durch geeignete Bemessung dieser Drosseln läßt sich zum Beispiel erreichen, daß bei einer Spannungsschwankung von $\pm$ 10 % im Netz der Leistungsfaktor in der Netzleitung nur zwischen 0,9 induktiv und 0,9 kapazitiv schwankt. Da bei Netzunterspannung eine Blindleistungsabgabe erfolgt, wird gleichzeitig das speisende Netz wirkungsvoll gestützt.

Die so betriebene Umformermaschine besitzt Stabilisatoreigenschaften, d.h. die Ausgangsspannung ist, wie oben erläutert, unabhängig von allen Spannungsschwankungen und Oberwellen im Primärnetz. Durch die in den rotierenden Massen der Maschine, die gegebenenfalls durch zusätzliche Schwungmassen vergrößert sein können, gespeicherte Energie lassen sich auch kurze Netzunterbrechungen überbrücken, wie sie besonders bei Umschaltvorgängen im Netz bzw. bei Kurzschlußfortschaltungen vorkommen. Zur Vermeidung von Energierücklieferung in das gestörte Netz ist es zweckmäßig, einen Schnellschalter 28 zwischen die Umformermaschine 25 und das Netz RST zu schalten, der vorzugsweise als statischer Schalter, bestehend aus Triacs bzw. gegenparallel geschalteten Thyristoren oder ähnlichen Halbleiterelementen ausgeführt ist.

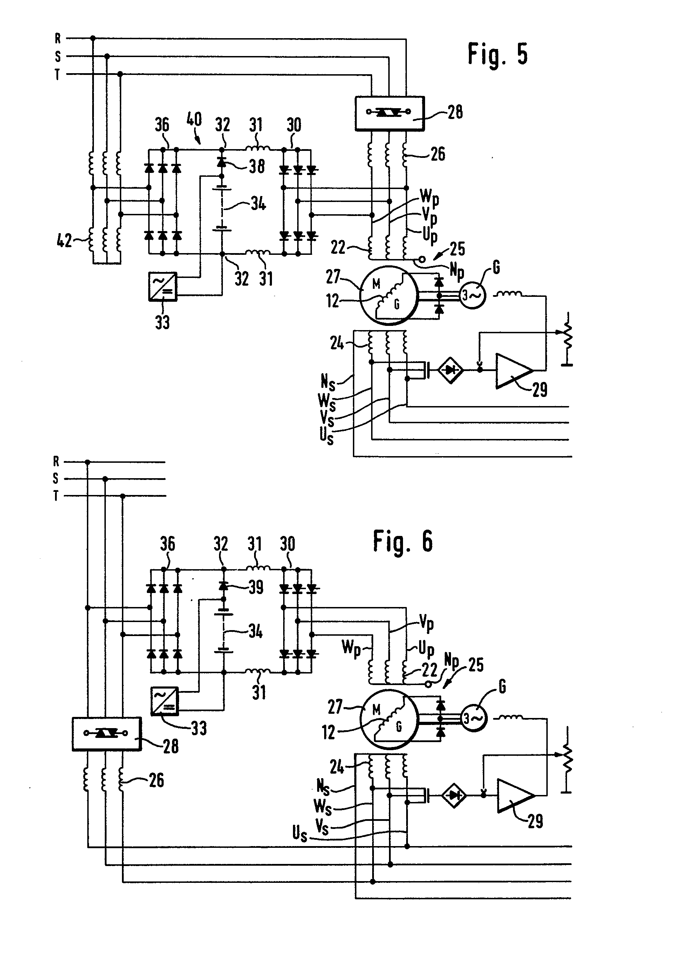

In Fig. 4 ist eine Schaltung der Umformermaschine 25 dargestellt, die in bekannter Weise über einen Stromrichter betrieben wird. Dabei wird die der Primärwicklung zuzuführende Energie über eine Stromversorgung 40 bereitgestellt. Diese Stromversorgung weist einen als Wechselrichter arbeitenden Stromrichter 30 auf, der über Glättungsdrosseln 31 aus einer Gleichstromquelle 32 gespeist wird. Die Primärwicklung 22 der Umformermaschine kann dabei die für den Betrieb des Stromrichters 30 erforderliche Blindleistung zur Verfügung stellen. Ein solches System kann als Frequenzwandler arbeiten und besitzt die Eigenschaft einer unterbrechungsfreien Stromversorgungsanlage, wenn der Gleichstromkreis 32 eine Batterie 34 aufweist. Normalerweise wird die Gleichstromenergie des Gleichstromkreises 32 einem dreiphasigen Wechselstromnetz RST über gesteuerte oder ungesteuerte Gleichrichter 36 entnommen. Bei Verwendung gesteuerter Gleichrichter können diese gleichzeitig die Ladung einer fest im Gleichstromkreis eingeschalteten Batterie 34 übernehmen. Bei Verwendung ungesteuerter Gleichrichter wird die Batterie erst bei Netzausfällen zugeschaltet. Für das Laden der Batterie ist dann ein getrenntes Ladegerät 33 vorzusehen. Als Schalter kann eine im Normal-, d.h. Netzbetrieb sperrende Diode 38 Verwendung finden.

Bei Stromrichterbetrieb tritt eine starke zusätzliche Belastung der Primärwicklung insbesondere durch die vom Stromrichter erzwungene 5. und 7. Stromoberwelle auf. Diese zusätzliche Strombelastung kann 30 - 35 % der normalen Belastung betragen und führt zu einer entsprechenden zusätzlichen thermischen Belastung der Primärwicklung.

Die vom Stromrichter erzwungenen Stromoberwellen, insbesondere die 5. und 7. Oberwelle, können unterdrückt werden durch Einschaltung von Filterkreisen 21, 21' als Oberwellenfilter. Diese Filter mit Drosseln 19, 19' sowie damit in Reihe geschalteten Kondensatoren 23, 23' sind vorzugsweise als verstimmte Serienresonanzkreise ausgeführte Saugkreise, deren Resonanzfrequenz der 5. bzw. 7. Oberwellenfrequenz entspricht. Die Filter wirken für die Grundfrequenz als Kondensatoren. Besonders günstige Verhältnisse ergeben sich, wenn die Kondensatoren 23, 23' der Resonanzkreise so bemessen werden, daß diese die Stromrichterblindleistung decken. Bei einer solchen Auslegung wird die Primärwicklung 22 der Umformermaschine sowohl von der Strombelastung durch die Stromoberwellen als auch weitgehend vom Blindstrom des Stromrichters entlastet, wodurch eine günstige Beeinflussung des Wirkungsgrades erzielt wird.

Zwei Schaltungen für besonders betriebssichere Umformersysteme sind in den Fig. 5 und 6 dargestellt. Bei der Schaltung nach Fig. 5 ist die Primärwicklung 22 der Umformermaschine 25, wie bei der Ausführungsform nach

Fig. 3, über Drosseln 26 und statische Schalter 28 an das Netz RST angeschlossen. Parallel hierzu ist eine Stromversorgung 40 geschaltet, die im wesentlichen der Stromversorgung nach Fig. 4 entspricht. Dieser Stromversorgungskreis 40 ist über einen Spartransformator 42 an das Netz RST angeschlossen. Über diesen Spartransformator wird die Betriebsspannung der Gleichrichter 36 auf etwa 80 % der Netzspannung abgesenkt.

Der Transformator kann bei höherpulsigen Schaltungen der Gleichrichter 36 auch als Schwenktransformator ausgeführt sein.

Der Wechselrichter 30 ist bei dieser Schaltung normalerweise so ausgesteuert, daß er nur die Leerlaufverluste der Umformermaschine 25 deckt. Da der Gleichrichter 36 und der Wechselrichter 30 im normalen Betrieb nur im Schwachlastbetrieb gefahren werden, gehen deren Verluste praktisch nicht in die gesamte Verlustbilanz ein, d.h. das Umformersystem arbeitet mit dem durch die Bauart der erfindungsgemäßen Umformermaschine bedingten hohen Wirkungsgrad.

Bei Über- oder Unterschreitung der zulässigen Frequenztoleranz wird der statische Schalter 28 geöffnet und die volle Energiezufuhr erfolgt über die Stromversorgung 40 mit Gleichrichter 36 und Wechselrichter 30.

Bei vorgegebener Unterschreitung der Netzspannung oder bei Netzausfall erfolgt die Energiezufuhr aus der Batterie 34 über den Wechselrichter 30.

Die Redundanz dieses zweikanaligen Aufbaus stellt sicher, daß auch bei Ausfall einzelner Bauelemente in einem der beiden Stromversorgungskreise die Stromversorgung der Umformermaschine sichergestellt bleibt.

Die Schaltung nach Fig. 6 entspricht grundsätzlich der nach Fig. 5. Abweichend ist hier die Stromversorgung über die statischen Schalter 28 und die Drosseln 26 an die Sekundärseite 24 der Umformermaschine 25 angeschaltet. Bei der Betriebsart nach dieser Schaltung hat die Sekundärwicklung nur die Blindleistung des Verbrauchers zu decken, während die Wirkleistung direkt dem Netz entnommen wird.

Aufgrund des Dämpferkäfigs besitzt die Sekundärwicklung für alle nicht netzfrequenten Vorgänge eine sehr niedrige Impedanz. Die Maschine wirkt zusammen mit den netzseitig installierten Drosseln 26 wie ein auf die Grundfrequenz des Netzes abgestimmter Bandpaß, d.h. störende Vorgänge im Netz werden weitgehend vom Verbraucher ferngehalten.

Da die Primärwicklung 22 und die Sekundärwicklung 24 weitgehend vom Laststrom entlastet sind, ergibt sich auf diese Weise eine weitere, nennenswerte Steigerung des gesamten Wirkungsgrades.

Bei den Schaltungen nach den Fig. 4 bis 6 ist die überbrückbare Zeit eines Stromausfalls beschränkt durch die Kapazität der vorgesehenen Batterie. Diese reicht im allgemeinen für einen Zeitraum von Minuten. Im allgemeinen wird daher bei derartigen Systemen ein zusätzliches Notstromaggregat mit einer Kraftmaschine, insbesondere einer Verbrennungskraftmaschine oder einer thermischen Strömungskraftmaschine, installiert. Die Batterie dient dann zur Überbrückung der Zeit, die das Notstromaggregat benötigt, um Spannung zu liefern. Derartige Notstromaggregate sind im allgemeinen leistungsmäßig so ausgelegt, daß sie neben besonders kritischen Verbrauchern, die unterbrechungslos zu versorgen sind, auch weniger kritische Verbraucher über eine Notstromschiene versorgen können. Bei den bekannten Anordnungen ist dabei neben einer Umformermaschine für die unterbrechungsfreie Stromversorgung ein von der Kraftmaschine angetriebener zusätzlicher Generator vorzusehen, der die nötige Energie für den Betrieb der Umformermaschine und die Speisung der Notstromschiene liefert.

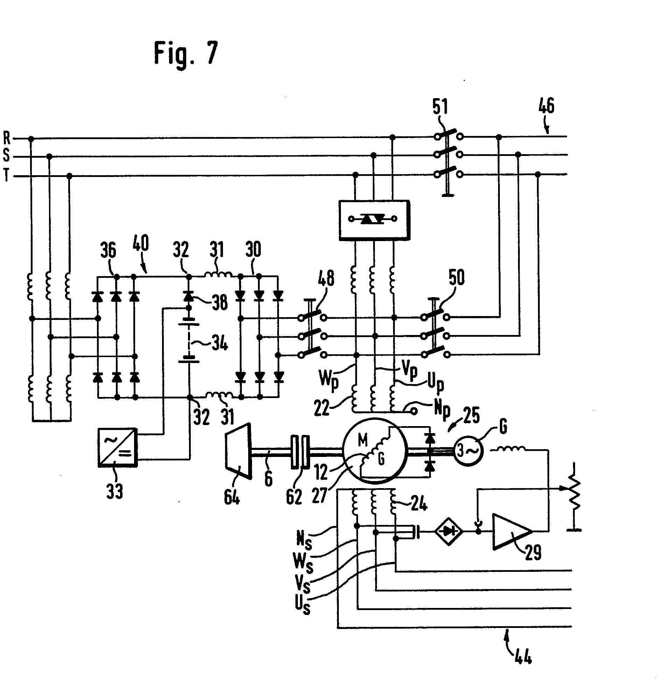

Eine Anlage, mit der die Aufgaben einer derartigen Notstromversorgung mit wesentlich geringerem apparativem Aufwand lösbar sind, ist in Fig. 7 dargestellt.

Die Umformermaschine 25 gemäß den Fig. 1 und 2 ist hier mit einer Schaltung gemäß Fig. 5 an das Netz RST angeschlossen. Ein Anschluß gemäß Fig. 6 ist ebenfalls möglich. Außer der über die Sekundärwicklung 24 gespeisten Stromschiene 44, an die die unterbrechungslos zu versorgenden Verbraucher angeschlossen sind, ist wenigstens eine weitere Stromschiene 46 vorgesehen, die normalerweise direkt aus dem Netz RST über den Schalter 51 gespeist wird und die beispielsweise als Notstromschiene ausgelegt sein kann. Die Primärwicklung 22 der Umformermaschine 25 ist über einen Schalter 48 von der Stromversorgung 40 trennbar. Die Primärwicklung 22 der Umformermaschine 25 ist weiter über einen Schalter 50 mit der weiteren Stromschiene 46 verbindbar. Die beiden Schalter 48 und 50 sind wechselweise bedienbar, d.h. der Schalter 50 kann nur geschlossen werden, wenn der Schalter 48 geöffnet ist.

- 13 -

Die Welle 6 des Rotors 27 der Umformermaschine 25 ist über eine Trennkupplung 62 mit einer Kraftmaschine 64 kuppelbar, die vorzugsweise mit der Umformermaschine 25 auf einem gemeinsamen Rahmen angeordnet ist. Im normalen Betrieb sind die Schalter 48 und 51 geschlossen und der Schalter 5o geöffnet; damit wird die Stromschiene 44 über die Sekundärwicklung 24 der Umformermaschine 25 versorgt und die Schiene 46 direkt vom Netz RST.

Bei Netzunterbrechung erfolgt zunächst eine Stromversorgung der Primärwicklung 22 über den Wechselrichter 30 aus der Batterie 40. Es wird gleichzeitig die Kraftmaschine 64 angefahren, die bei Erreichen der Nenndrehzahl über die Kupplung 62 mit der Welle 6 der Umformermaschine 25 gekuppelt wird. Aus der dann mechanisch angetriebenen Umformermaschine wird über die Sekundärwicklung die Stromschiene 44 weiter unterbrechungslos versorgt. Nach Erreichen dieses Betriebszustandes werden die Schalter 48 und 51 geöffnet. Die Primärwicklung, die bis zum Ankuppeln der Kraftmaschine die Leistung in der Sekundärwicklung induziert hat, kann nach Öffnen der Schalter 48 und 51 über den Schalter 50 generatorisch auf die Notstromschiene 46 geschaltet werden. Von der Umformermaschine kann damit auch im Notstrombetrieb die volle Typenleistung abgegeben werden. Es entfällt damit also ein zusätzlicher, von einer Kraftmaschine angetriebener Generator, wie er bei bekannten Notstromversorgungsanlagen notwendig ist.

Wird die Umformermaschine in der beschriebenen Weise in einem Notstromsystem verwendet, muß die Welle 6 so dimensioniert werden, daß die summierte Leistung von Primär- und Sekundärwicklung von der Kraftmaschine mechanisch zugeführt werden kann.

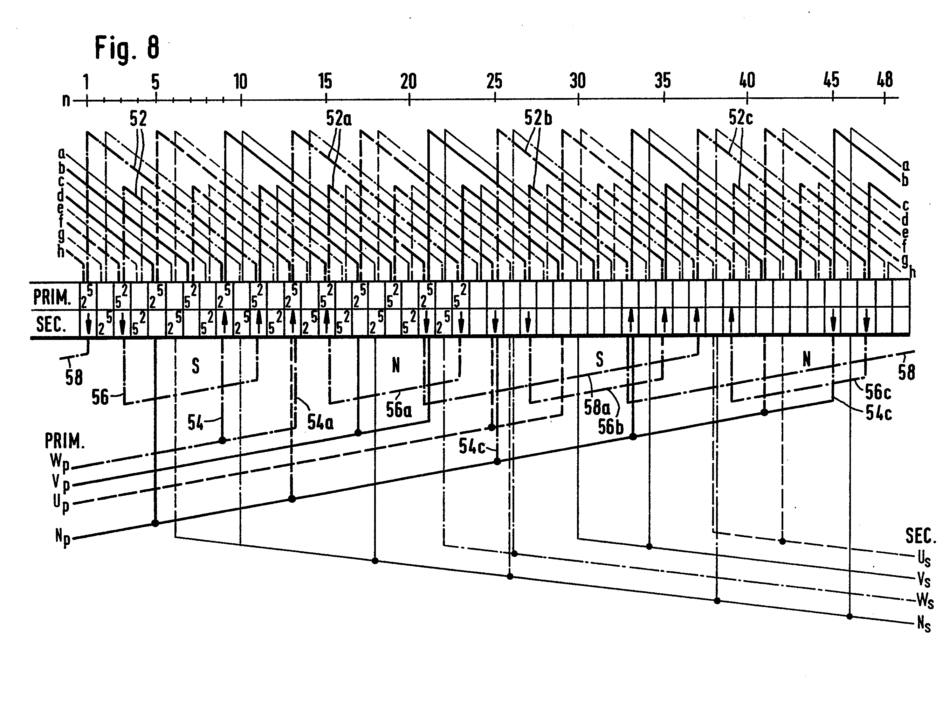

In Fig. 8 ist das Wickelschema einer Ausführungsform
einer als dreiphasige Drehstrommaschine ausgebildeten
Synchroninnenpolmaschine wiedergegeben. Die Auslegungsdaten dieser Maschine sind:

|            | Europa   | USA      |
|------------|----------|----------|
| Leistung   | 300 kVA  | 360 kVA  |
| Spannung   | 400 V    | 480 V    |
| Frequenz   | 50 Hz    | 60 Hz    |
| Polzahl    | 4        | 4        |
| Nutenzahl  | 48       | 48       |

In bei der Darstellung von Wickelschemata üblicher Weise
ist der Stator der Maschine abgewickelt dargestellt.
Darüber befindet sich eine lineare Skala mit der den
Nuten zugeordneten Ordnungszahlen n1 bis n48. Oberhalb der
Abwicklung des Stators sind alle Wicklungen eingezeichnet.
Unterhalb des Stators sind die Verbindungen der Polwicklungen für eine der drei Phasen der Primärwicklung
wiedergegeben, die weiter unten im einzelnen zu beschreiben
sein wird.

Die an das Netz anzuschließende Primärwicklung der Maschine
ist in stark ausgezogenen Linien wiedergegeben, während die
Sekundärwicklung in schwach ausgezogenen Linien dargestellt
ist. Die einzelnen Polwicklungen der Primärwicklung sind
jeweils mit einem Ende abwechselnd mit den Netzanschlüssen
für drei Drehstromphasen $U_p$, $V_p$, und $W_p$ verbunden. Die
anderen Wicklungsenden sind jeweils mit dem Netzanschluß
für den Nulleiter $N_p$ verbunden.

Entsprechend sind für die Sekundärwicklung Anschlüsse $U_s$,
$V_s$ und $W_s$ für das Sekundärnetz vorgesehen, an die die Polwicklungen der Sekundärwicklung mit einem Ende angeschlossen sind, während sie mit ihrem anderen Ende jeweils mit dem Anschluß für den Nulleiter $N_s$ des Sekundärnetzes verbunden sind.

Für die Primärwicklung und die Sekundärwicklung ist die Phase U jeweils gestrichelt, die Phase V voll ausgezogen und die Phase W strichpunktiert dargestellt. Der Nullleiter ist strichpunktiert mit doppelten Punkten dargestellt.

Die in der Darstellung geschnittenen Verbindungen sind links und rechts auf dem Wicklungsschema jeweils mit den Buchstaben a bis i bezeichnet.

Für die vier Polwicklungen der Phase $W_p$ der Primärwicklung sind in der Zeichnung die Anschlüsse und die Verbindungen beispielhaft für alle Phasen der Primär- und der Sekundärwicklung wiedergegeben.

Die Wicklungen der einzelnen Pole 52 bis 52c bestehen jeweils aus zwei Teilwicklungen.

Von den vier Polwicklungen sind jeweils die Wicklungen 52 und 52b bzw. 52a und 52c in Reihe geschaltet und überdecken die Südpole bzw. die Nordpole. Die so gebildeten Wicklungsgruppen sind parallel geschaltet.

Der Nutschritt für die Polwicklungen beträgt 1 : 7 : 11. Die äußere Teilwicklung erstreckt sich über 11 Nuten, während die innere Teilwicklung sich über 7 Nuten erstreckt.

- 16 -

Bei der ausgeführten Maschine sind für die innere Teilwicklung jeweils zwei Windungen und für die äußere Teilwicklung fünf Windungen vorgesehen.

Damit werden die Polwicklungen wie folgt gewickelt. Der
Leiter für die Wicklung der Pole 52 und 52b ist mit dem
Leiterende 54 an die Netzphase $W_p$ angeschlossen. Er ist
entgegen dem Uhrzeigersinn zunächst durch die Nut n9 und
die Nut n3 mit zwei Windungen gewickelt. Er geht dann über
56 in die Nut n11 über und wird dann mit fünf Windungen
über die Nuten n11 und n1 gewickelt. Er wird dann weiter
über 58 via i zur Nut n 33 geführt und wiederum mit zwei
Windungen durch die Nuten n33 und n27 und dann über 56b
mit fünf Windungen über die Nuten n35 und n25 gewickelt.
Das Leiterende 54b ist mit dem Sternpunkt $N_p$ verbunden.

Die Polwicklungen 52a, 52c des zweiten Polpaares werden
im entgegengesetzten Sinne, also im Uhrzeigersinn, gewickelt.
Ausgehend von dem Phasenanschluß $W_p$ wird über 54a zunächst
die äußere Teilwicklung des Poles 52a mit fünf Windungen
über die Nuten n13 und n23 gewickelt. Der Leiter wird dann
über 56a mit zwei Windungen über die Nuten n15 und n21 -
innere Teilwicklung - gewickelt. Über 58a geht dann der
Leiter über in die Polwicklung 52c, die mit 5 Windungen über
die Nuten n37 und n 47 - äußere Teilwicklung - und über 56c
mit 2 Windungen über die Nuten n39 und n45 - äußere Teilwicklung-gewickelt ist. Das Leiterende 54c ist dann an den
Netzanschluß für den Nulleiter $N_p$ angeschlossen.

In gleicher Weise sind die den Phasen $U_p$ und $V_p$ zugeordneten Polwicklungen gewickelt.

Auch die Polwicklungen der Sekundärwicklung sind in gleicher Weise ausgeführt, wobei die Polwicklungen der Sekundärwicklung jeweils um eine Nutteilung gegenüber den Polwicklungen der Primärwicklung versetzt sind. Bei dem Ausführungsbeispiel sind jeweils die Nuten mit einer ungeraden Ordnungszahl, also die Nuten n1, n3, n5 ff durch die Primärwicklung belegt, während die Nuten mit der geraden Ordnungszahl, also n2, n4, n6 ff durch die Sekundärwicklung belegt sind.

Bei dem im vorstehenden beschriebenen Wickelschema einer Umformermaschine mit 48 Nuten ist jede Nut mit der gleichen Zahl von Leitern belegt. Bei dem Ausführungsbeispiel sind durch jede Nut sieben Leiter hindurchgeführt. Dieses ist zwar eine optimale Auslegung, aber nicht zwingend. Abhängig von der eventuell vorgegebenen Nutenzahl werden die Wicklungen jeweils entsprechend den Auslegungsregeln des Elektromaschinenbaus zu optimieren sein.

- 1 -

<u>A n s p r ü c h e</u>

1. Rotierende Umformermaschine mit einem Ständer mit einer Drehstrom-Primärwicklung und einer Drehstrom-Sekundärwicklung gleicher Polzahl sowie mit einem, mit einer Dämpferwicklung versehenen Läufer, der in dem Ständer drehbar gelagert ist, <u>dadurch gekennzeichnet</u>, daß die Primärwicklung (22) und die Sekundärwicklung (24) in einem gemeinsamen Ständerpaket (8) jeweils in durchgehenden Nuten über den Umfang des Ständerpaketes gleichmäßig verteilt angeordnet sind, wobei beide Wicklungen sich über die volle Breite des Ständerpaketes erstrecken.

2. Umformermaschine nach Anspruch 1, <u>dadurch gekennzeichnet</u>, daß der Läufer (10) eine Gleichstromerregerwicklung (12) trägt.

3. Umformermaschine nach Anspruch 2, <u>dadurch gekennzeichnet</u>, daß der Läufer mit ausgeprägten Polen versehen ist.

4. Umformermaschine nach Anspruch 2, <u>dadurch gekennzeichnet</u>, daß die Erregerwicklung bürstenlos erregt ist.

5. Umformermaschine nach Anspruch 1, <u>dadurch gekennzeichnet</u>, daß die Nutteilung der Dämpferwicklung (16,20) 10 elektrische Grad beträgt, so daß netz- oder lastseitig erzeugte Oberwellen 5.,7.,11.,13., 17. und 19. Ordnung weitgehend kurzgeschlossen werden.

6. Umformermaschine nach Anspruch 1, <u>dadurch gekennzeichnet</u>, daß die beiden Wicklungen (22,24) überwiegend in gesonderten Nuten angeordnet sind.

7. Umformersystem mit einer Umformermaschine nach einem der vorhergehenden Ansprüche, dadurch gekennzeichnet, daß der Primärwicklung (22) netzseitig Drosseln (26) vorgeschaltet sind.

8. Umformersystem nach Anspruch 7, dadurch gekennzeichnet, daß der Primärwicklung (22) ein statischer Schalter (28) vorgeschaltet ist.

9. Umformersystem mit einer Umformermaschine nach einem der Ansprüche 1 bis 6, dadurch gekennzeichnet, daß der Primärwicklung (22) ein Wechselrichter (30) vorgeschaltet ist, der über einen Gleichrichter (36) aus einem Wechselspannungsnetz (RST) angespeist ist.

10. Umformersystem nach Anspruch 9, dadurch gekennzeichnet, daß der Wechselrichter (30) wahlweise über eine Batterie (34) angespeist ist.

11. Umformersystem nach Anspruch 9, dadurch gekennnzeichnet, daß dem aus Gleichrichter (36) und Wechselrichter (30) gebildeten Stromversorgungskreis (40) eine Reihenschaltung von Drosseln (26) und statischen Schaltern (28) parallel geschaltet ist und daß der Wechselrichter (30) bei Netzbetrieb so ausgesteuert ist, daß von ihm im wesentlichen nur noch die Leerlaufverluste der Umformermaschine (25) gedeckt werden. (Fig. 5)

12. Umformersystem nach Anspruch 9, dadurch gekennzeichnet, daß dem Umformersystem aus Gleichrichter (36), Wechselrichter (30) und Umformermaschine (25) eine Reihenschaltung von Drosseln (26) und statischen Schaltern (28) parallel geschaltet ist und daß der Wechselrichter (30) bei Netzbetrieb so ausgesteuert ist, daß von ihm im wesentlichen nur die Leerlaufverluste der Umformermaschine (25) gedeckt werden. (Fig. 6)

0071852

13. Umformersystem nach Anspruch 11 oder 12, dadurch gekenn-
    zeichnet, daß der Umformermaschine (25) eine mit dieser
    kuppelbaren Wärmekraftmaschine (54) zugeordnet ist und daß
    bei Netzausfall nach Übernahme des Antriebs durch die Wärmekraftmaschine die Motorwicklung generatorisch an eine Notstromschiene (46) anschaltbar ist. (Fig. 7)

**Fig. 1**

**Fig. 2**

Fig. 3

Fig. 4

3/4

0071852

Fig. 5

Fig. 6

**Fig. 7**

Fig. 8

0071852

**Europäisches Patentamt**

# EUROPÄISCHER RECHERCHENBERICHT

Nummer der Anmeldung

EP 82 10 6701

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. $^3$) |
|---|---|---|---|
| | --- | | H 02 K 47/18 |
| X | DE-A-1 538 095 (SIEMENS) * Seiten 2-5 * | 1-3 | H 02 J 9/06 |
| | --- | | |
| X | DE-A-1 938 810 (FISIKO) * Seite 3, Zeilen 6-25; Seiten 4-6; Figuren 1-3 * | 1,3,7 | |
| | --- | | |
| X | FR-A-2 178 790 (REDONNET) * Seite 2, Zeilen 6-14; Figuren 2,3,5 * | 1,6 | |
| | --- | | |
| A | US-A-3 227 941 (COLLAMORE) * Spalte 2, Zeilen 31-72; Spalte 3, Zeilen 1-25; Figuren 1,2 * | 2-4 | |
| | --- | | RECHERCHIERTE SACHGEBIETE (Int. Cl. $^3$) |
| A | US-A-2 169 017 (BAUDRY) * Seite 1, linke Spalte, Zeilen 41-44; Figur 1 * | 5 | H 02 K |
| | --- | | H 02 J |
| A | DE-A-1 765 958 (LICENTIA) * Seite 4, Zeilen 19-29; Seiten 5,6; Figuren 1,2 * | 8,13 | |
| | --- | | |
| A | US-A-3 665 495 (CARTER et al.) * Spalte 5, Zeilen 26-75; Spalte 6, Zeilen 1-49; Spalte 15, Zeilen 26-60; Figur 1 * | 9,10 | |
| | ---      -/- | | |

Der vorliegende Recherchenbericht wurde für alle Patentansprüche erstellt.

| Recherchenort | Abschlußdatum der Recherche | Prüfer |
|---|---|---|
| DEN HAAG | 03-11-1982 | TIO K.H. |

EPA Form 1503. 03.82

| | **Europäisches** **EUROPÄISCHER RECHERCHENBERICHT** | Nummer der Anmeldung |
|---|---|---|
| | Patentamt | EP 82 10 6701 |

| | **EINSCHLÄGIGE DOKUMENTE** | | Seite 2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 526 778 (CROCKER et al.) * Spalte 4, Zeilen 28-75; Spalte 5, Zeilen 1-65; Spalte 11, Zeilen 63-75; Figur 1 * | 11,12 | |
| A | TECHNISCHE MITTEILUNGEN AEG-TELEFUNKEN, Band 69, Nr. 3, 1979, Seiten 74-80, Berlin, DE. A. JOST: "Ersatzstromversorgung mit rotierenden Maschinen" * Seite 78, linke Spalte, Zeilen 44-48; Seite 78, rechte Spalte, Zeilen 1-22; Figur 5 * | 13 | |
| E | DE-A-3 002 946 (ANTON PILLER) * Seite 5, Zeilen 24-30; Seiten 6-10; Figur * & GB - A - 2 071 932 (ANTON PILLER)(Cat. E) & FR - A - 2 474 782 (ANTON PILLER)(Cat. E)(Or. no. 4) | 1-4,9, 10 | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 03-11-1982 | TIO K.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82